# FASCICULE DE BREVET EUROPEEN

(11) **EP 0 443 395 B1**
(45) Date de publication et mention de la délivrance du brevet: **23.03.1994**
(21) Numéro de dépôt: 91101854.7
(22) Date de dépôt: 11.02.1991
(51) Int. Cl.: B23D 35/00, B26D 7/26

(54) **Machine à refouler et couper en long une bande de matière qui défile**
Vorrichtung zum Eindrücken und Schneiden in Längsrichtung eines laufenden Materialbandes
Apparatus to press and cut longitudinally a moving strip of material

(30) Priorité: 21.02.1990 CH 565/90
(43) Date de publication de la demande: 28.08.1991
(73) Titulaire: PETERS MASCHINENFABRIK GmbH, 22525 Hamburg (DE)
(72) Inventeur: Schroeder, Lothar, W-2200 Altenmoor (DE)
(74) Mandataire: Colomb, Claude

(56) Documents cités:
- DE-A- 1 627 297
- DE-A- 2 905 803
- GB-A- 2 072 563
- US-A- 2 187 211
- US-A- 2 393 586
- US-A- 3 332 326
- US-A- 3 478 407

## Description

La présente invention concerne une machine à refouler et à fendre en long une bande de matière qui défile, du genre défini dans le préambule respectivement des revendications 1 et 7; voir par exemple FR-A 2 244 620.

On sait qu'une telle machine peut être, par exemple, placée à la suite d'une onduleuse faisant partie d'un train continu de machines qui, à partir de bandes de papier en bobines, élaborent une bande continue de carton ondulé. En fin de machine, cette bande est découpée longitudinalement, par exemple en deux bandes, puis chaque bande transversalement en plaques ébauches. Ces plaques ébauches seront ensuite reprises une à une dans des machines de façonnage pour former des caisses ou d'autres formes d'emballage.

Dans la machine de refendage en long et de refoulage, chaque changement d'une nouvelle série de plaques ébauches à effectuer exige :
- un remplacement de certains outils de refendage et de refoulages par d'autres, et
- un repositionnement de chaque outil dans le sens transversal, c'est-à-dire dans le sens perpendiculaire au défilement de la bande à travailler.

En vue d'adapter la machine au format de la nouvelle série d'ébauches et pour des raisons de production qui, dans le cas présent, ont trait essentiellement à l'onduleuse, il est très important que le remplacement et le repositionnement des outils dit "changement de format" puisse se faire très rapidement, au point même de ne pas devoir varier la vitesse de l'onduleuse.

De nombreuses solutions ont déjà été proposées pour réduire la durée de changement de format. Etant donné qu'aussi bien l'opération de refendage que celle de refoulage s'effectue en principe à l'aide d'un outil et d'un contre-outil, jusqu'à ce jour les outils sont généralement montés sur un premier arbre rotatif et les contre-outils sur un second arbre rotatif parallèle au premier et dont l'entraxe peut être réglé. Les outils et les contre-outils (nommés par la suite outils) sont bien sûr montés déplaçables et réglables en position fixe sur leur arbre respectif en fonction du format des ébauches à produire. De plus, une même station de travail peut être constituée soit d'une seule paire d'arbres sur lesquels sont montés les outils et les contre-outils pour le refendage et le refoulage, soit de deux paires d'arbres dont une paire porte les outils et les contre-outils de refendage et l'autre paire ceux de refoulage. Par la suite, il sera supposé qu'une station de refendage et de refoulage comporte au moins un outil et un contre-outil rotatifs entre lesquels passent la bande à travailler. En conséquence, parmi les solutions proposées jusqu'à ce jour pour accélérer le changement de format, à peu près toutes consistent à placer, à proximité de la paire d'arbres situés en position de travail, c'est-à-dire de manière que la bande à travailler puisse passer entre leurs outils et contre-outils respectifs, au moins une autre paire d'arbres en réserve et également équipés respectivement d'outils et de contre-outils. Lors d'un changement de format, la paire d'arbres en position de travail est déplacée dans une autre position dite de réserve, alors que la paire d'arbres en réserve est mise en position de travail. Ces arbres peuvent être déplacés selon un mouvement transversal (décrit par exemple dans le brevet DE-A 2306296) ou un mouvement circulaire (voir US-A 3489043) dans une même station de travail. IL est aussi proposé d'user de deux stations de travail espacées dans le sens de défilement de la bande, les rouleaux d'une station étant en position de travail, alors que ceux de l'autre station sont en position de réserve, et vice-versa. (US-A 3408886, FR-A 2244620). Toutes les solutions mentionnées ci-dessus ont les inconvénients suivants :
- il n'est pas possible de régler la pression de travail entre un outil et son contre-outil monté sur une paire d'arbres indépendamment de celle des autres montés sur cette même paire d'arbres. En effet, cette pression ne peut être que la même pour tous puisqu'elle résulte de la force avec laquelle les deux arbres sont pressés l'un en direction de l'autre;
- il n'est pas possible, une fois qu'une paire d'arbres est en position de travail, de varier la position transversale d'un contre-outil par rapport à son outil; et
- le nombre possible de combinaisons des outils présents dans une machine est relativement réduit puisque tous les outils d'une même paire d'arbres passent tous obligatoirement simultanément de la position de travail à la position de réserve, et vice-versa.

La présente invention a donc pour but de fournir une machine de refendage en long et de refoulage qui présente une grande possibilité de variation dans le choix des outils, de la pression et de la position relative de chaque outil et contre-outil.

Ce but est atteint grâce à une machine selon respectivement les revendications 1 et 7.

Il sera maintenant décrit un mode de réalisation de l'invention en référence au dessin annexé dans lequel :
- la figure 1 représente une vue en coupe de la machine dans le sens de défilement de la bande et montrant les outils et contre-outils;
- la figure 2 est une vue en coupe selon A - A de la figure 1 montrant un seul outil;
- la figure 3 est une vue en coupe selon A - A de la figure 1 montrant trois outils;
- la figure 4 est une vue en coupe selon B - B de la figure 1; et
- la figure 5 est une vue partielle en coupe identique à la figure 1 d'un autre mode de réalisation de la machine.

Dans la présente description, le sens de défilement de la bande sera nommé sens de défilement et celui qui lui est perpendiculaire, sens transversal.

Le bâti de la machine comprend deux parois latérales B s'étendant dans le sens de défilement. Entre ces deux parois latérales B, défile, en principe horizontalement, la bande 1 destinée par exemple à être fendue longitudinalement à l'aide d'un outil rotatif 11 situé au-dessus de la bande, et d'un contre-outil rotatif 21 situé au-dessous de la bande.

Les deux parois B sont reliées entre elles par deux paires de parois transversales 4a, 4b, 4'a, 4'b dont une paire 4a, 4b est située au-dessus et l'autre paire 4'a, 4'b au-dessous de la bande 1. Une paroi 4a de la paire supérieure est située en amont de l'outil 11 par rapport au sens de défilement et l'autre 4b en aval. Il en va de même pour la paire de parois 4'a, 4'b située au-dessous de la bande 1.

De la machine en question, sera maintenant décrite la partie située au-dessus de la bande 1, étant entendu que la partie située au-dessous sera essentiellement identique à celle de dessus et symétrique à cette dernière par rapport à cette même bande 1.

La paroi supérieure amont 4a comprend deux rails transversaux 30, le long desquels peut coulisser un chariot 2 de positionnement d'outil 11. Le chariot 2 est muni de deux guidages 3 en prise avec les rails 30. Le chariot 2, dont la largeur transversale est relativement réduite, s'étend jusqu'aux environs de la paroi aval 4b. Un moteur 5 est monté sur le chariot 2.

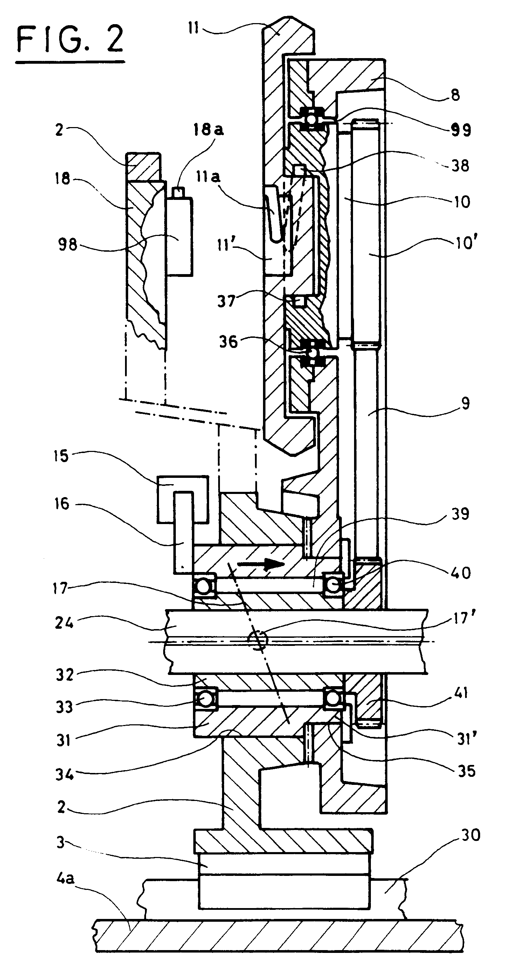

Ce moteur, dont l'axe de sortie est muni d'une roue dentée 6 en prise avec une crémaillère 7 montée sur la paroi aval 4a, sert à déplacer transversalement le chariot 2 le long des rails 30. Le chariot 2 est muni d'un alésage 34 (voir figure 2) dans lequel est monté un support sous forme d'arbre creux 31 dont une extrémité 31' émerge hors de l'alésage 34. Sur cette extrémité 31' est montée en rotation libre, au moyen d'un palier lisse 35, la première extrémité d'un levier basculant 8 s'étendant vers l'aval. L'autre extrémité du levier 8 est munie d'un alésage 99 dans lequel est monté rotatif, à l'aide de roulements 36. un mandrin 10 destiné à recevoir un outil 11. L'outil 11 est fixé sur le mandrin 10 à l'aide d'un système à baïonnette, c'est-à-dire un système dans lequel deux ergots 37 de l'outil 11 sont en prise avec deux rainures hélicoïdales 38 (réalisées radialement dans la surface intérieure d'un alésage du mandrin 10). Par rotation de l'outil 11 dans un sens ou dans l'autre, il est possible de le verrouiller en position ou de le déverrouiller relativement au mandrin 10, le sens de verrouillage étant opposé au sens de rotation de travail de l'outil 11. Sur la seconde extrémité du mandrin 10 est montée bloquée en rotation une roue dentée 10'.

A l'intérieur de l'alésage 39 de l'arbre creux 31 est monté rotatif, à l'aide de roulements 40, un manchon creux 32 traversé par une barre carrée 24 transversale et montée rotative dans deux paliers (non représentés) situés dans les deux parois latérales B. Sur cette même barre carrée 24 est montée, à proximité du manchon creux 32, une roue dentée 41 reliée par une courroie dentée 9 à la roue dentée 10' du mandrin 10.

De plus, le chariot 2 est muni d'une tourelle 18 dont l'axe de rotation est transversalement orienté et se trouve à mi-distance entre les parois amont 4a et aval 4b. Sur la tourelle 18 peuvent être angulairement répartis deux (ou trois) outils de réserve 26, 27. La fixation de chaque outil 26, 27 sur la tourelle 18 est aussi réalisée au moyen d'un système à baïonnette, c'est-à-dire un axe 98 et un ergot 18a de la tourelle 18 qui viennent en prise avec respectivement un alésage 11' et une rainure hélicoïdale 11a de l'outil 11 (voir figure 2), le sens de rotation de verrouillage étant opposé à celui de fixation de l'outil 11 sur le levier basculant 8.

Le levier 8 peut être basculé entre deux positions, à savoir une première position dans laquelle il maintient l'outil 11 en contact avec la bande 1, et une deuxième position dans laquelle l'alésage 11' de l'outil 11, situé exactement en face d'un axe 98 de la tourelle 18, peut être transféré du levier basculant 8 sur la tourelle 18, ou vice-versa. Pour effectuer ce transfert qui exige un léger déplacement transversal relatif entre le levier 8 et le chariot 2, sur la périphérie de l'arbre creux 31, est réalisée une rainure hélicoïdale 17 en prise avec un ergot 17' correspondant fixé sur la surface de l'alésage 34 du chariot 2, de manière que, par rotation de l'arbre 31 dans un sens ou dans l'autre, on obtienne un déplacement correspondant de ce même arbre, et donc du levier 8, par rapport au chariot 2. La rotation de l'arbre creux 31 est réalisée à l'aide d'un vérin 14 dont les extrémités sont en prise, au moyen de leviers adéquats 15 et 16, avec le chariot 2 et l'arbre creux 31.

Pendant une opération de refoulage du carton 1 au moyen de l'outil 11, ce dernier est entraîné en rotation par l'intermédiaire du mandrin 10, de la roue dentée 10', de la courroie crantée 9 et de la roue dentée 41 bloquée en rotation sur la barre carrée 24, cette dernière étant entraînée en rotation à au moins une extrémité au moyen d'un moteur (non représenté).

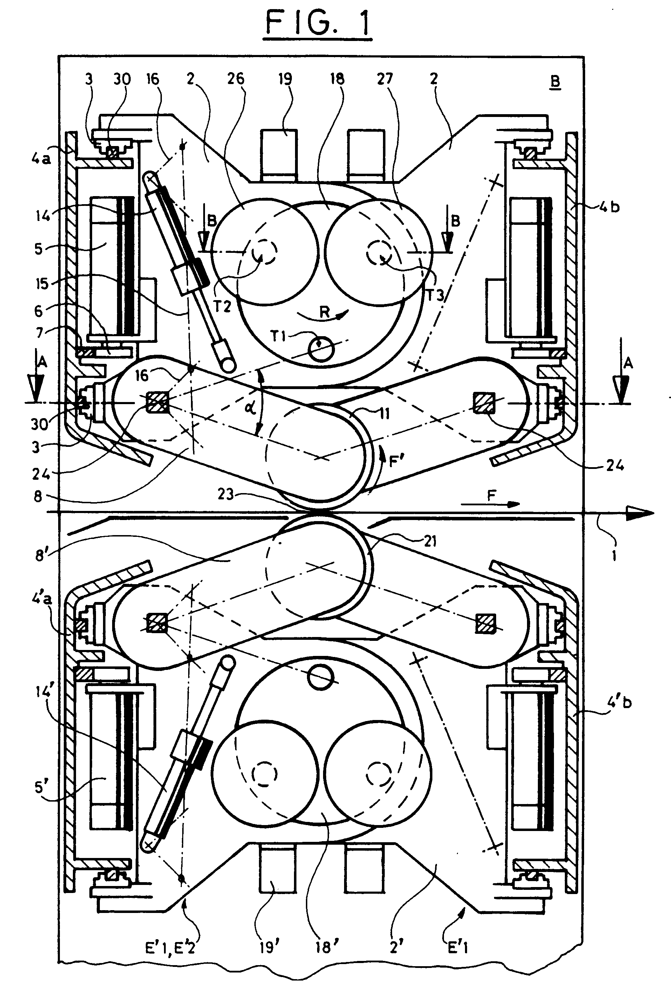

Si l'on suppose que l'outil 11 est en position de travail, comme cela est représenté sur la figure 1, et que deux outils 26 et 27 sont en réserve sur la tourelle 18 aux postes T2 respectivement T3, alors que le poste T1, en position de transfert, est libre, un changement de l'outil 11 par l'outil 26 s'effectue de la manière suivante :
- basculement du levier 8, au moyen du vérin 14, pour amener l'outil en face du poste T1;
- rotation de l'outil 11, dans un sens opposé à son sens de rotation de travail F', pour dégager l'outil 11 du mandrin 10 et mettre l'entrée de l'alésage 11' de l'outil 11 en prise avec l'extrémité libre de l'axe 98 du poste T1 de la tourelle 18;
- rotation de l'outil 11 dans un sens opposé à celui utilisé pour dégager l'outil 11 du mandrin 10, c'est-à-dire dans le sens de la flèche F, pour fixer, à l'aide du système à baïonnette 11a et 18a, l'outil 11 sur l'axe 98, c'est-à-dire sur la tourelle 18;
- rotation de la tourelle 18, au moyen d'un moteur 19 monté sur le chariot 2 et d'un engrenage à vis sans fin 20 (ou autres moyens, par exemple un loquet pneumatique). dans le sens de la flèche R pour emmener le poste T2 et son outil 26 en position de transfert; et
- transfert de l'outil 26 sur le levier 8 et basculement de ce dernier pour amener ce même outil 26 en position de travail, c'est-à-dire en contact avec la bande 1, par des opérations exactement identiques et inverses à celles effectuées pour amener l'outil 11 de la position de travail à la position de transfert.

Pour le cas où l'on aurait désiré remplacer l'outil 11 par l'outil 27 (et non l'outil 26), il est aisé de comprendre que, par une rotation appropriée de la tourelle 18, c'est cet outil 27 qui aurait été amené en position de transfert.

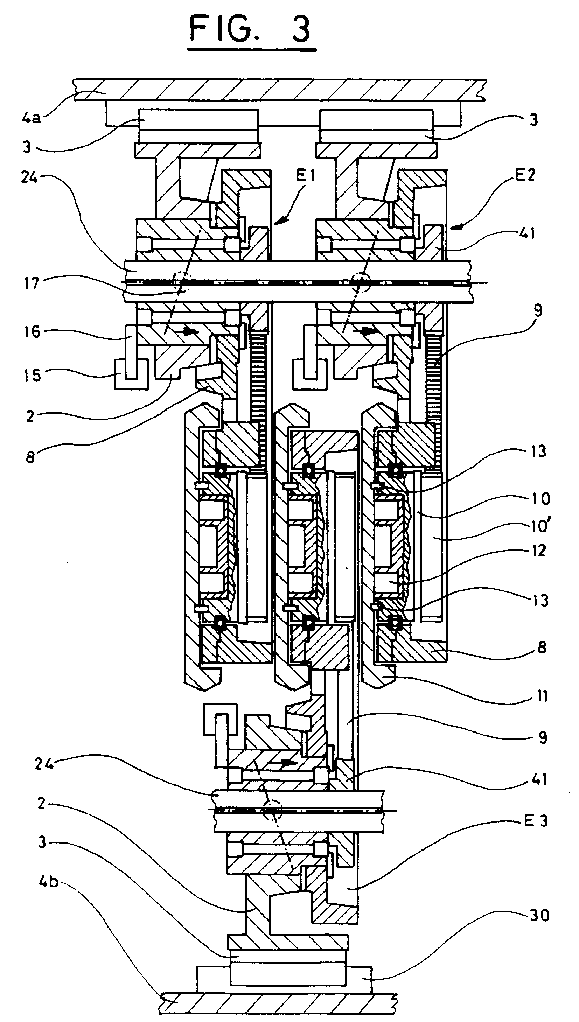

Bien entendu, plusieurs outils 11, transversalement décalés, doivent être prévus simultanément en position de travail. Pour cela, il est prévu de monter de façon déplaçable le long des rails 30, plusieurs ensembles chariot-tourelle-levier basculant E (dans la figure 3, seulement deux ensembles E1 et E2 sont représentés). De plus, pour augmenter encore le nombre d'outils à disposition dans la machine, il est prévu de monter sur la paroi aval 4b d'autres ensembles E (dans la figure 3 un seul ensemble E3 est représenté) exactement identiques mais inversément orientés par rapport aux ensembles E1 et E2 montés sur la paroi amont 4a. Comme cela est visible sur la figure 3, par une conception judicieuse de la forme et des dimensions des ensembles E, il est possible de faire en sorte que les ensembles E1 et E2 montés sur la paroi amont 4a s'imbriquent avec ceux E3 montés sur la paroi aval 4b de manière à obtenir la plus petite distance minimale D de travail entre un outil 11 d'un ensemble E1 monté sur la paroi amont 4a et un outil 11 d'un ensemble E3 monté sur la paroi aval 4b, étant entendu que les ensembles amont E1 et E2 sont transversalement montés dans un ordre alterné avec les ensembles aval E3, c'est-à-dire qu'entre chaque outil 11 porté par deux ensembles consécutifs amont E1 et E2 est intercalé (à l'exception des deux outils d'extrémité) un outil porté par un ensemble aval E3 et vice-versa.

Comme déjà mentionné ci-dessus, les contre-outils 21 sont portés par des ensembles amont E1', E2', et aval E3', montés respectivement sur des parois amont 4'a et aval 4'b identiques aux ensembles E1, E2 et E3 relatifs aux outils 11, mais disposés symétriquement à ces derniers par rapport à la bande 1.

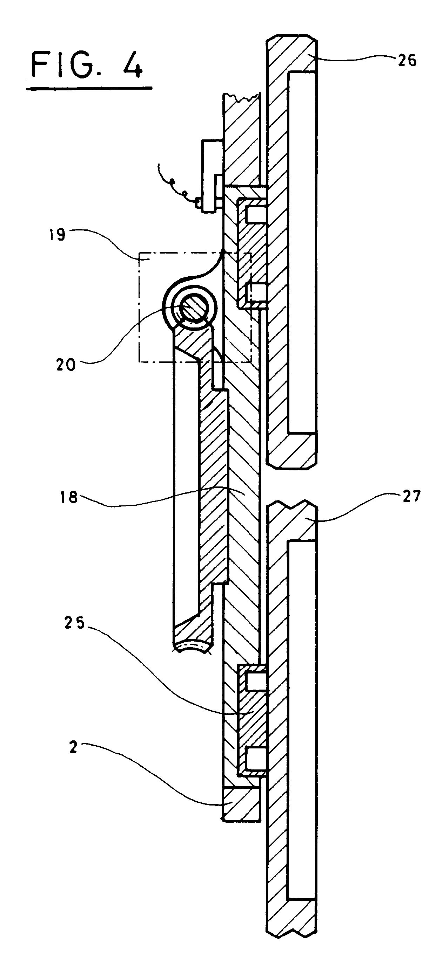

Dans la figure 3, la fixation de l'outil 11 sur le mandrin 10 ou sur la tourelle 18 n'est pas réalisée à l'aide de systèmes à baïonnette mais au moyen d'électro-aimants 12, respectivement 25 (voir figure 4) montés sur la tourelle 18, respectivement le mandrin 10. En tenant compte du système de fixation à baïonnette décrit plus haut, la construction et le mode de fonctionnement de telles fixations à électro-aimants n'ont pas besoin d'être décrits ici plus en détail. L'outil 11 est bloqué en rotation sur le mandrin 10 au moyen d'ergots 13 montés sur le mandrin 10 et destinés à venir en prise avec des orifices correspondants de l'outil 11.

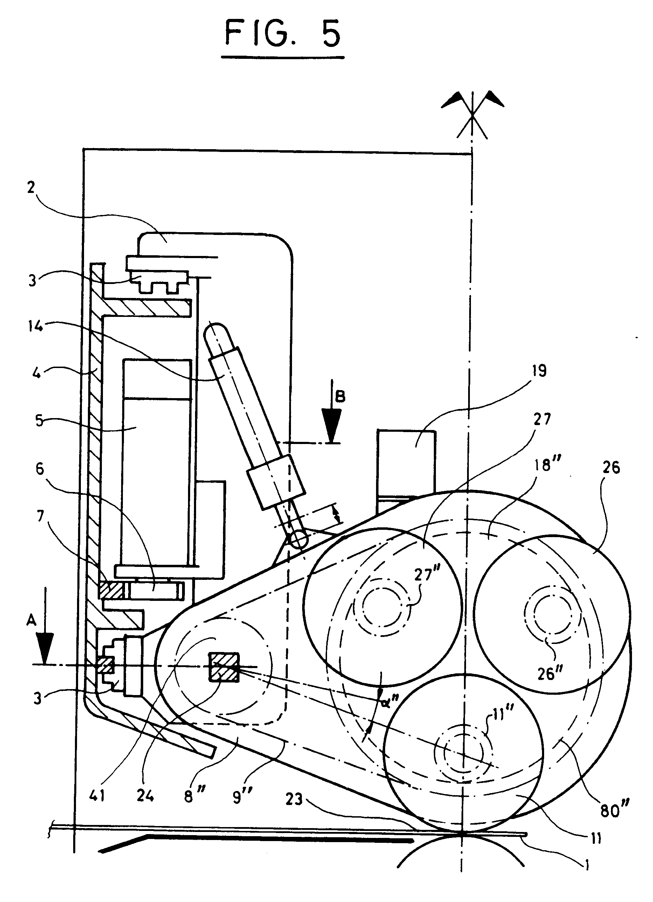

Dans le mode de réalisation selon la figure 5, le magasin 18'' est directement monté en rotation sur le levier basculant 8'' qui, à l'aide du vérin 14, peut occuper une première position dans laquelle un outil 11 est en position de travail, et une seconde position où ce même outil 11 est légèrement écarté de la bande 1, c'est-à-dire en position de repos. C'est dans 1a seconde position du levier 8'' qu'il est possible de réaliser le positionnement angulaire du magasin 18'' pour mettre en place de travail l'outil souhaité. Chaque outil 11, 26, 27 est coaxialement associé à une poulie dentée 11'', 26'', 27'' respectivement, chacune étant en prise avec une couronne dentée 80'' montée sur le levier 8'' et entraînée en rotation au moyen de la courroie dentée 9''. Dans ce cas, l'angle de basculement α'' est inférieur à celui de la figure 1. Pour éviter que tous les outils 11, 26, 27 tournent simultanément, il est possible de monter chacun d'eux sur un axe excentrique pour régler individuellement leur prise ou non avec la couronne dentée 80''. Pour le reste, le mode de réalisation selon la figure 5 se déduit par analogie de celui relatif aux figures précédentes. Par exemple, le mode de fixation de chaque outil 11, 26, 27 avec leur poulie respective 11'', 26'', 27'' peut être déduit de la figure 2 montrant comment ces éléments sont mis et/ou maintenus en place sur le levier basculant 8 du premier mode de réalisation, étant entendu que le système à baïonnette 11a, 18a peut aussi être utilisé pour fixer chaque outil 11, 26, 27 sur la tourelle 18''.

Des modes de réalisation de l'invention, décrits ci-dessus, il ressort :
- que le nombre possible de combinaisons d'outils (ou de contre-outils), pour un nombre d'outils présents dans la machine environ égal à celui de l'art antérieur, est de beaucoup supérieur à celui possible à partir de ce même art antérieur. Autrement dit, il sera très rarement nécessaire de devoir démonter un outil (ou un contre-outil) pour le remplacer par un autre;
- qu'il est possible de régler individuellement la pression de chaque outil ou contre-outil à l'aide des vérins 14, 14';
- qu'il est possible de régler individuellement et très rapidement la position relative entre un outil 11 et son contre-outil 21 par l'intermédiaire directe des moteurs 5, 5' qui positionnent transversalement leur chariot respectif 2, 2'; et
- que l'encombrement de la machine dans le sens longitudinal, c'est-à-dire du défilement F de la bande 1 est réduit au minimum pour un nombre maximal de combinaisons possibles d'outils. Cet avantage est aussi prépondérant puisque, comme déjà mentionné plus haut, une machine fait souvent partie d'un train de machines dont la longueur trop élevée pose des problèmes lors de son implantation.

Il est clair que de nombreuses modifications peuvent être apportées à l'exemple de réalisation décrit ci-dessus sans sortir du cadre de l'invention. Ainsi, par exemple, dans le cas où il est préférable de ne pas placer les outils de refoulage et ceux de refendage en long sur une même ligne transversale, il serait possible d'envisager qu'à chaque poste T1, T2, T3 de la tourelle 18 deux outils, c'est-à-dire un pour le refoulage, l'autre pour le refendage, soient présents et prêts à être transférés simultanément sur le levier basculant 8 conçu, lui aussi, pour recevoir simultanément deux outils.

## Revendications

1. Machine à refouler et couper en long une bande de matière qui défile, comprenant des moyens destinés à régler la position de travail des outils (11) dans la direction perpendiculaire au sens de défilement (F) de la bande (1), au moins un magasin (18) avec au moins un outil de réserve (26, 27), des moyens (8) pour transférer un outil (11) de la position de travail à la position de réserve et vice-versa, et des moyens (9, 10, 24, 41) d'entraînement en rotation de l'outil (11) en position de travail, caractérisée en ce que la machine comprend au moins un chariot (2), déplaçable perpendiculairement au sens de défilement (F) de la bande (1), muni du magasin (18) avec au moins un outil de réserve (26, 27) et d'un levier (8) déplaçable, relativement au chariot (2), entre une première position dans laquelle il maintient un outil (11) en position de travail et une deuxième position où au moins un outil (11) peut être transféré de ce même levier (8) au magasin (18), et vice-versa.

2. Machine selon la revendication 1, caractérisée en ce que le chariot (2) s'étend essentiellement dans le sens de défilement (F) de la bande (1), le magasin a la forme d'une tourelle (18) dont l'axe de rotation est perpendiculaire au sens de défilement (F), la tourelle (18) possédant plusieurs postes (T1, T2, T3) de réception d'outils (26, 27) angulairement répartis et en ce qu'il comprend un levier (8) basculable, relativement au chariot (2), entre une première position dans laquelle il maintient un outil (11) en position de travail et une seconde position dans laquelle l'outil (11) peut être transféré du levier (8) à un poste (T1) libre de la tourelle (18), et vice-versa.

3. Machine selon la revendication 2, caractérisée en ce que les moyens d'entraînement en rotation de l'outil (11) en position de travail sont constitués par :
- une barre (24) s'étendant perpendiculairement au sens de défilement (F) de la bande (1) et entraînée en rotation, à au moins une extrémité, à l'aide d'un moteur;
- une roue dentée (41) bloquée en rotation sur la barre (24), l'outil (11) étant monté bloqué en rotation sur un mandrin (10) muni d'une roue dentée (10') et monté rotatif sur une première extrémité du levier (8) dont l'axe de basculement, situé sur l'autre extrémité, est confondu avec l'axe de la barre d'entraînement (24); et
- des moyens de transmission (9) entre les deux roues dentées (41, 10') qui autorisent le basculement du levier (8) d'une position à l'autre.

4. Machine selon la revendication 3, caractérisée en ce que les moyens de transmission sont constitués par une courroie crantée (9).

5. Machine selon l'une des revendications 2 à 4, caractérisée en ce que des moyens sont prévus pour réaliser un déplacement transversal relatif du levier (8) et du chariot (2), en vue de faciliter le transfert d'un outil (11) du levier (8) au magasin (18) et vice-versa.

6. Machine selon l'une des revendications 3 à 5, caractérisée en ce que le levier (8) est monté rotatif et fixé longitudinalement sur un arbre creux (31) dont l'axe est confondu avec celui de la barre (24), un système à ergot (17') et rainure hélicoïdale (17) étant situé entre l'arbre creux (31) et le chariot (2) de manière que ledit déplacement relatif soit effectué par rotation de l'arbre creux (31) à l'aide d'un vérin (14) ou autres moyens.

7. Machine à refouler et couper en long une bande de matière qui défile, comprenant des moyens destinés à régler la position de travail des outils (11) dans la direction perpendiculaire au sens de défilement (F) de la bande (1), au moins un magasin (18'') avec au moins un outil de réserve (26, 27), des moyens pour transférer un outil de la position de travail à la position de réserve et vice-versa, et des moyens d'entraînement en rotation de l'outil (11) en position de travail, caractérisé en ce que la machine comprend au moins un chariot (2), déplaçable perpendiculairement au sens de défilement (F) de la bande (1), un support (8'') monté sur le chariot (2) et muni du magasin (18'') d'outils (11, 26, 27) avec plusieurs postes de réception d'outils (T1 - T3) dont l'un (T1) correspond au poste de travail, le support (8'') étant déplaçable entre une première position dans laquelle l'outil (11) se trouvant en poste de travail (T1) est mis en position de travail et une seconde position dans laquelle ce même outil (11) est mis hors de la position de travail.

8. Machine selon la revendication 7, caractérisé en ce que le support (8'') se présente sous la forme d'un levier s'étendant essentiellement dans le sens de défilement (F) de la bande (1), le magasin a la forme d'une tourelle (18'') dont l'axe de rotation est perpendiculaire au sens de défilement (F), les postes (T1 - T3) étant angulairement répartis, et en ce que le levier (8'') est basculable entre ladite première et seconde position.

9. Machine selon la revendication 8, caractérisée en ce que les moyens d'entraînement en rotation de l'outil (11) en position de travail sont constitués par :
- une barre (24) s'étendant perpendiculairement au sens de défilement (F) de la bande (1) et entraînée en rotation, à au moins une extrémité, à l'aide d'un moteur;
- une roue dentée (41) bloquée en rotation sur la barre (24), l'outil (11) étant monté bloqué en rotation sur un mandrin (10) muni d'une roue dentée (10') et monté rotatif sur la tourelle (18'') située sur une première extrémité du levier (8'') dont l'axe de basculement, situé sur la seconde extrémité, est confondu avec celui de l'axe de la barre (24);
- des moyens de transmission (9'', 80''), entre la roue dentée (41) de la barre (24) et les roues dentées (11'', 26'', 27'') de chaque outil (11, 26, 27), qui autorisent le basculement du levier (8'') d'une position à l'autre.

10. Machine selon la revendication 9, caractérisée en ce que les moyens de transmission sont constitués par une courroie crantée (9'') et par une couronne dentée (80'') montée en rotation sur ladite première extrémité du levier (8'') et pouvant venir en prise avec la roue dentée (11'', 26'', 27'') de chaque outil (11, 26, 27).

11. Machine selon la revendication 2, comprenant deux parois latérales (B) parallèles au sens de défilement (F) de la bande (1) et deux parois transversales (4a, 4b) situées respectivement à l'amont et à l'aval de l'outil (11) en position de travail, caractérisée en ce que le chariot (2) est monté déplaçable à l'aide de guidages (3) et de rails (30) sur la paroi amont (4a) et/ou aval (4b).

12. Machine selon la revendication 2, caractérisée en ce que le chariot (2) est transversalement déplacé et positionné à l'aide d'un moteur (5) monté sur le chariot (2) et dont l'axe de sortie est muni d'une roue dentée (6) en prise avec une crémaillère (7) portée par la paroi transversale (4a, 4b).

13. Machine selon l'une des revendications 2 à 8, caractérisée en ce que chaque chariot (2), tourelle (18; 18'') et levier (8; 8'') constituent un ensemble (E1, E2, E3) démontable individuellement de la machine.

14. Machine selon l'une des revendications 5 à 9, caractérisée en ce que la fixation de l'outil (11) sur le magasin (18; 18'') ou mandrin (10) est réalisée au moyen de systèmes à baïonnette (11a, 18a, respectivement 37, 38) ou à electro-aimants (25, respectivement 12).

15. Machine selon l'une des revendication 3 à 10, caractérisée en ce que les ensembles (E1, E2, E3) sont montés alternativement sur la paroi amont (4a) et la paroi aval (4b), les outils (11) en position de travail étant situés à mi-distance entre les deux parois (4a, 4b).

16. Machine selon l'une des revendications précédentes, caractérisée en ce qu'un chariot (2'), un magasin (18') et un levier déplaçable (8') identiques à ceux du positionnement de l'outil (11) sont disposés symétriquement à ces derniers par rapport à la bande (1) en vue du positionnement d'au moins un contre-outil (21).

## Claims

1. Creasing and slitting machine for a travelling web, comprising means (2) designed for setting the operating position of the tools (11) perpendicularly to the travelling direction (F) of the web (1), at least a store (18) with at least one spare tool (26, 27), means (8) for transferring a tool (11) from the operating to the spare position and back, and means (9, 10, 24, 41) for rotarily driving the tool (11) in operating position, characterized by the fact that the machine includes at least one carriage (2) shiftable perpendicularly to the travelling direction (F) of the web (1) and provided with the store (18) with at least one spare tool (26, 27) and with a lever (8) shiftable with regard to the carriage (2) between a first position in which it is to hold a tool (11) in operating position, on the one hand, and a second position, on the other, in which at least one tool (11) may be transferred from the said lever (8) to the store (18) and back.

2. Machine according to claim 1, characterized by the fact that the carriage (2) extends essentially in the travelling direction (F) of the web (1), that the store has the shape of a turret (18) with a rotary axle perpendicular to the travelling direction (F), the turret (18) having various seats (T1, T2, T3) for the tools (26, 27) arranged at adequate angles, and that the said store includes a lever (8) tiltable with regard to the carriage (2) between a first position in which it is to hold a tool (11) in operating position, and a second position in which the tool (11) may be transferred from the lever (8) to a free seat (T1) of the turret (18) and back.

3. Machine according to claim 2, characterized by the fact that the means ensuring the rotary drive of the tool (11) in operating position consist of:
- a bar (24) extending perpendicularly to the travelling direction (F) of the web (1) and rotarily driven at least at one of its ends by a motor;
- a toothed wheel (41) rotarily locked on the bar (24), the tool (11) being fitted and rotarily locked on a mandrel (10) provided with a toothed wheel (10'), and being fitted so as to be able to rotate on the one end of the lever (8) whose tilting axle situated at the other end is identical with the axle of the drive bar (24); and
- transmission means (9) between the two toothed wheels (41, 10') enabling the tilting of the lever (8) from one position to the other.

4. Machine according to claim 3, characterized by the transmission means consisting of a toothed belt (9).

5. Machine according to one of the claims 2 to 4, characterized by means being foreseen for achieving a crosswise relative shift of the lever (8) and of the carriage (2) with the view to facilitating the transfer of a tool (11) from the lever (8) to the store (18) and back.

6. Machine according to one of the claims 3 to 5, characterized by the fact that the lever (8) is fitted rotarily and lengthwise on a hollow shaft (31) whose axle is identical with the one of the bar (24), a dog-like system (17') and a helical groove (17) being situated between the hollow shaft (31) and the carriage (2) in such a way that the said relative shift may be effectuated by the rotation of the hollow shaft (31) by means of a jack (14) or other appropriate means.

7. Creasing and slitting machine for a travelling web, comprising means designed for setting the operating position of the tools (11) perpendicularly to the travelling direction (F) of the web (1), at least a store (18'') with at least one spare tool (26, 27), means for transferring a tool from the operating to the spare position and back, and means for rotarily driving the tool (11) in its operating position, characterized by the fact that the machine includes at least one carriage (2) shiftable perpendicularly to the travelling direction (F) of the web (1), a lever (8'') fitted on the carriage (2) and provided with the store (18'') having several seats (T1 - T3) for the tools (11, 26, 27). One of the seat, ie (T1), corresponds to the operating seat, the lever (8'') being shiftable between a first position on which the tool (11) located in the operating seat (T1) is put into operating position, and a second position on which the tool (11) is out of operation.

8. Machine according to claim 7, characterized by the fact that the lever (8'') has the shape of a lever extending essentially in the travelling direction (F) of the web (1), the store has the shape of a turret (18'') whose rotary axle is perpendicular to the travelling direction (F), the seats (T1 - T3) being arranged at appropriate angles, and also that the lever (8'') is tiltable between the said first and second positions.

9. Machine according to claim 8, characterized by the fact that the means ensuring the rotary drive of the tool (11) in operating position consist of:
- a bar (24) extending perpendicularly to the travelling direction (F) of the web (1) and rotarily driven at least at one of its ends by a motor;
- a toothed wheel (41) rotarily locked on the bar (24), the tool (11) being fitted and rotarily locked on a mandrel (10) provided with a toothed wheel (10'), and being fitted rotarily on a turret (18'') itself situated on a first end of the lever (8'') whose tilting axle situated at the second end is identical with the one of the axle of the bar (24);
- transmission means (9, 80'') between the toothed wheel (41) of the bar (24) and the toothed wheels (11', 26,'', 27'') of the respective tools (11, 26, 27) enabling the tilting of the lever (8'') from one position to the other.

10. Machine according to claim 9, characterized by the fact that the transmission means consist of a toothed belt (9'') and a toothed rim (80'') fitted for rotary action on the said first end of the lever (8'') and able to engage in the toothed wheel (11'', 26'', 27'') of the respective tools (11, 26, 27).

11. Machine according to claim 2, comprising two lateral walls (B) parallel to the travelling direction (F) of the web (1) and two crosswise walls (4a, 4b) situated respectively upstream and downstream of the tool (11) in operating position, characterized by the carriage (2) being shiftable by means of guides (3) and rails (30) of the upstream (4a) and/or downstream (4b) walls.

12. Machine according to claim 2, characterized by the carriage (2) being crosswise shifted and positioned by means of a motor (5) fitted on the carriage (2) and whose outlet axle is provided with a toothed wheel (6) engaged in a rack (7) supported by the crosswise wall (4a, 4b).

13. Machine according to one of the claims 2 to 8, characterized by each carriage (2), turret (18; 18'') and lever (8; 8'') making up an assembly (E1, E2, E3) allowing to be dismantled individually from the machine.

14. Machine according to one of the claims 5 to 9, characterized by the fastening of the tool (11) on the store (18; 18'') or mandrel (10) being achieved by means of bayonet systems (11a, 18a respectively 37, 38) or electric magnets (25, respectively 12).

15. Machine according to one of the claims 3 to 10, characterized by the assemblies (E1, E2, E3) being fitted alternately on the upstream wall (4a) and the downstream wall (4b) whereby the tools (11) in operating position are situated half-way between the two walls (4a, 4b).

16. Machine according to one of the aforementioned claims, characterized by a carriage (2'), a store (18') and a shiftable lever (8') identical with those for positioning the tool (11) being arranged symmetrically to the latter with regard to the web (1) with a view to positioning at least one tool counter-part (21).

## Patentansprüche

1. Maschine zum längsweisen Rillen und Schlitzen eines durchlaufenden, bahnartigen Werkstoffes mit Mitteln zum Einstellen der Arbeitsstellung der Werkzeuge (11) quer zur Durchlaufrichtung (F) der Bahn (1), wenigstens einem Magazin (18) mit wenigstens einem Reservewerkzeug (26, 27), Mitteln (8) zum Verschieben eines Werkzeugs (11) von der Arbeitsstellung in Reservestellung und umgekehrt, sowie Mitteln (9, 10, 24, 41) zum Antrieb des Werkzeugs (11) in Arbeitsstellung, dadurch gekennzeichnet, dass die Maschine wenigstens einen quer zur Durchlaufrichtung (F) der Bahn (1) verschiebbaren Wagen (2) mit einem wenigsten ein Reservewerkzeug (26, 27) beinhaltenden Magazin (18) und einem Hebel (8), der sich in bezug auf den Wagen (2) zwischen der ersten Position, in welcher er das Werkzeug (11) in Arbeitsstellung hält, und einer zweiten Position, in welcher wenigstens ein Werkzeug (11) von eben diesem Hebel (8) in das Magazin (18) und umgekehrt verschoben werden kann, verschieben lässt.

2. Maschine gemäss Patentanspruch 1, dadurch gekennzeichnet, dass sich der Wagen (2) hauptsächlich in der Durchlaufrichtung (F) der Bahn (1) erstreckt, das Magazin die Form eines Aufbaus (18) mit quer zur Durchlaufrichtung (F) angeordneter Drehachse besitzt, wobei der Aufbau (18) mehrere Stellen (T1, T2, T3) zur Aufnahme der in entsprechenden Winkeln angeordneten Werkzeuge (26, 27) umfasst, sowie dass er einen Hebel (8) umfasst, der sich in bezug auf den Wagen (2) zwischen einer ersten Position, in welcher er ein Werkzeug (11) in Arbeitsstellung hält und einer zweiten Position, in welcher das Werkzeug (11) vom Hebel (8) in eine freie Stelle (T1) des Aufbaus (18) verschieben werden kann, kippen lässt.

3. Maschine gemäss Patentanspruch 2, dadurch gekennzeichnet, dass die Mittel zum Antrieb des Werkzeugs (11) in Arbeitsstellung folgende Bestandteile umfassen :
- eine Stange (24), die sich quer zur Durchlaufrichtung (F) der Bahn (1) erstreckt und an wenigstens einem Ende mit Hilfe eines Motors angetrieben wird;
- ein auf der Stange (24) nichtdrehbares Zahnrad (41), wobei das Werkzeug (11) in einem mit Zahnrad (10') versehenen Spannfutter (10) nicht drehbar und auf einem ersten Ende des Hebels (8) drehbar angeordnet ist, dessen Kippachse am anderen Ende die Achse der Antriebsstange (24) bildet; und
- Transmissionsmittel (9) zwischen den beiden Zahnrädern (41, 10'), die das Kippen des Hebels (8) von einer Position in die andere ermöglichen.

4. Maschine gemäss Patentanspruch 3, dadurch gekennzeichnet, dass die Transmissionsmittel aus einem Zahnriemen (9) bestehen.

5. Maschine gemäss einem der Patentansprüche 1 bis 4, dadurch gekennzeichnet, dass Mittel zum verhältnismässigen Querverschieben des Hebels (8) und des Wagens (2) zwecks Erleichterung der Verschiebung des Werkzeugs (11) vom Hebel (8) in das Magazin (18) und umgekehrt vorgesehen sind.

6. Maschine gemäss einem der Patentansprüche 3 bis 5, dadurch gekennzeichnet, dass der Hebel (8) drehbar und in Längsrichtung auf einer Hohlwelle (31) montiert ist, deren Achse diejenigen der Stange (24) bildet, wobei eine Vorrichtung mit Nocken (17') und Spiralnut (17) zwischen der Hohlwelle (31) und dem Wagen (2) so angeordnet ist, dass die besagte verhältnismässige Verschiebung durch Drehen der Hohlwelle (31) mit Hilfe eines Hebers (14) oder anderer Mittel bewerkstelligt werden kann.

7. Maschine zum längsweisen Rillen und Schlitzen einer durchlaufenden Bahn mit Mitteln zum Einstellen der Arbeitsstellung der Werkzeuge (11) quer zur Durchlaufrichtung (F) der Bahn (1), wenigstens einem Magazin (18'') mit wenigstens einem Reservewerkzeug (26, 27), Mitteln zum Verschieben eines Werkzeugs von der Arbeits- in die Reservestellung und umgekehrt, sowie Mitteln zum Antrieb des Werkzeugs (11) in Arbeitsstellung, dadurch gekennzeichnet, dass die Maschine wenigstens einen Wagen (2), der sich quer zur Durchlaufrichtung (F) der Bahn (1) verschieben lässt, einen Halter (8''), der auf den Wagen (2) montiert ist und ein Magazin (18'') für die Werkzeuge (11, 26, 27) mit mehreren Stellen (T1 - T3) zur Aufnahme der Werkzeuge, von welchen eine (T1) der Arbeitsstelle entspricht, umfasst, wobei sich der Halter (8'') zwischen einer ersten Position, in der das Werkzeug (11) an der Arbeitsstelle (T1) in Arbeitsstellung befindet und einen zweiten Position, in welcher das besagte Werkzeug (11) aus der Arbeitstellung ausgerückt wird, verschieben lässt.

8. Maschine gemäss Patentanspruch 7, dadurch gekennzeichnet, dass der Halter (8'') die Form eines Hebels besitzt, der sich hauptsächlich in der Durchlaufrichtung (F) der Bahn (1) erstreckt, das Magazin die Form eines Aufbaus (18'') aufweist, dessen Drehachse quer zur Durchlaufrichtung (F) liegt, wobei die Stellen (T1 - T3) in entsprechendem Winkel angeordnet sind, und dass sich der Hebel (8'') zwischen der ersten erwähnten Position und der zweiten kippen lässt.

9. Maschine gemäss Patentanspruch 8, dadurch gekennzeichnet, dass die Mittel zum Antrieb des Werkzeugs (11) in Arbeitsstellung folgende Bestandteile umfassen :
- eine Stange (24), die sich quer zur Durchlaufrichtung (F) der Bahn (1) erstreckt und an wenigstens einem Ende mit Hilfe eines Motors angetrieben wird;
- ein auf der Stange (24) nichtdrehbares Zahnrad (41), wobei das Werkzeug (11) in einem mit Zahnrad (10') versehenen Spannfutter (10) nicht drehbar und auf dem Aufbau (18'') an ersten Ende des Hebels (8'') drehbar angeordnet ist, dessen Kippachse am anderen Ende die Achse der Antriebsstange (24) bildet;
- Transmissionsmittel (9'', 80'') zwischen dem Zahnrad (41) der Stange (24) und den Zahnrädern (11'', 26'', 27'') der Werkzeuge (11, 26, 27), die das Kippen des Hebels (8'') von einer Position in die andere ermöglichen.

10. Maschine gemäss Patentanspruch 9, dadurch gekennzeichnet, dass die Transmissionsmittel aus einem Zahnriemen (9'') und einem Zahnkranz (80'') bestehen, welch letzterer am besagten ersten Ende des Hebels (8'') drehbar angeordnet ist und mit dem Zahnrad (11'', 26'', 27'') des jeweiligen Werkzeugs (11, 26, 27) in Eingriff kommen kann.

11. Maschine gemäss Patentanspruch 2, mit zwei parallel zur Durchlaufrichtung (F) der Bahn (1) angeordneten Seitenwänden (B) und zwei Querwänden (4a, 4b) vor und nach dem Werkzeug (11) in Arbeitsstellung, dadurch gekennzeichnet, dass der Wagen (2) mit Hilfe von Führungen (3) und Schienen (30) auf der vorstehenden Wand (4a) und/oder der nachstehenden Wand (4b) verschoben werden kann.

12. Maschine gemäss Patentanspruch 2, dadurch gekennzeichnet, dass der Wagen (2) mit Hilfe eines Motors (5) quer verschoben und eingestellt wird, der auf dem Wagen (2) angeordnet ist und dessen Abtriebsachse mit einem Zahnrad (6) verbunden ist, das seinerseits mit einer durch die Querwand (4a, 4b) getragenen Zahnstange (7) im Eingriff steht.

13. Maschine gemäss einem der Patentansprüche 2 bis 8, dadurch gekennzeichnet, dass jeder Wagen (2), jeder Aufbau (18; 18'') und jeder Hebel (8; 8'') einen einzeln aus der Maschine ausbaubaren Bausatz (E1, E2, E3) bilden.

14. Maschine gemäss einem der Patentansprüche 5 bis 9, dadurch gekennzeichnet, dass die Befestigung des Werkzeugs (11) auf dem Magazin (18; 18'') oder im Spannfutter (10) mit Hilfe von Bajonettsystemen (11a, 18a bzw. 37, 38) oder Elektromagneten (25 bzw. 12) bewerkstelligt wird.

15. Maschine gemäss einem der Patentansprüche 3 bis 10, dadurch gekennzeichnet, dass die Bausätze (El, E2, E3) abwechslungsweise an der vorstehenden Wand (4a) und an der nachstehenden Wand (4b) angebracht sind, wobei sich die Werkzeuge (11) in Arbeitsstellung in halbem Abstand zwischen den beiden Wänden (4a, 4b) befinden.

16. Maschine gemäss einem der vorstehenden Patentansprüche, dadurch gekennzeichnet, dass ein Wagen (2') ein Magazin (18') und ein verschiebbarer Hebel (8') gleicher Ausführung wie diejenigen zum Einstellen des Werkzeugs (11) symmetrisch zu den letzteren in bezug auf die Bahn (1) zwecks Einstellung wenigstens eines Gegenstücks (21) angeordnet sind.
